Europäisches Patentamt

European Patent Office

Office européen des brevets

(19)

(11) Veröffentlichungsnummer: **0 146 701**
**B1**

(12) **EUROPÄISCHE PATENTSCHRIFT**

(45) Veröffentlichungstag der Patentschrift:
**07.12.88**

(21) Anmeldenummer: **84111679.1**

(22) Anmeldetag: **29.09.84**

(51) Int. Cl.⁴: **G 01 S  15/89,** G 01 S  17/46,
G 01 B  11/02, G 01 B  11/14

(54) **Anordnung zur Abstandsdetektion zwischen einem Objekt und einem Ultraschall-Objektiv.**

(30) Priorität: **10.11.83  DE 3340646**

(43) Veröffentlichungstag der Anmeldung:
**03.07.85 Patentblatt 85/27**

(45) Bekanntmachung des Hinweises auf die Patenterteilung:
**07.12.88 Patentblatt 88/49**

(84) Benannte Vertragsstaaten:
**CH DE FR GB LI NL**

(56) Entgegenhaltungen:
**DE-A- 3 004 250**
**GB-A- 2 069 689**
**GB-A- 2 083 313**
**US-A- 3 790 281**
**US-A- 4 254 331**
**US-A- 4 356 392**

**NATURE, Band 232, Nr. 5306, 9 Juli 1971, Seiten 110-111, BASINGSTOKE, (GB). A. KORPEL et al.: "Acoustic Microscope operating at 100 MHz".**
**Leitz-Mitt. Wiss. u. Techn. Bd. VIII Nr. 3/4 Wetzlar, Mai 1982, S. 65**

**Die Akte enthält technische Angaben, die nach dem Eingang der Anmeldung eingereicht wurden und die nicht in dieser Patentschrift enthalten sind.**

(73) Patentinhaber: **ERNST LEITZ WETZLAR GMBH, Ernst-Leitz-Strasse 30 Postfach 20 20, D-6330 Wetzlar 1 (DE)**

(72) Erfinder: **Fischbach, Herbert, Ing. grad., Ringstrasse 3, D-63331 Nauborn (DE)**
Erfinder: **Hülsmann, Dieter, Marienstrasse 30, D-6336 Solms (DE)**
Erfinder: **Atalar, Abdullah, Dr.-Ing., Bahcelievler, 5 Sok.47/4, Ankara (TR)**

## Beschreibung

Die Erfindung betrifft ein akustisches Mikroskop zur Untersuchung von Objekten mit einem Ultraschall-Objektiv, das einen lichtdurchlässigen Linsenkörper mit einer als sphärische Kalotte ausgebildeten Vertiefung im Zentrum seiner einem Untersuchungsobjekt zugewandten Frontfläche sowie eine den Linsenkörper halternde und diesen bis auf seine Frontfläche gegen Lichteinfall abschirmende Fassung aufweist, einer Sende/Empfangseinrichtung für Ultraschallsignale, die einen in der Fassung angeordneten und mit dem Linsenkörper gekoppelten piezoelektrischen Wandler enthält, sowie einem Immersionsmittel in dem zwischen der Frontfläche des Linsenkörpers und dem Untersuchungsobjekt gebildeten Spalt.

Aus der US-PS 4 356 392 ist ein optisches Abbildungssystem bekannt, welches mit einer optoelektronischen Detektionsanordnung zur Bestimmung einer Abweichung zwischen der Bildebene des Abbildungssystems und einer zweiten Ebene versehen ist, in der ein Bild entsteht. Die Detektionsanordnung weist eine einen Hilfsstrahl erzeugende Strahlungsquelle sowie ein Reflexionselement im Strahlengang des Hilfsstrahls auf, welcher von der zweiten Ebene ein erstes Mal reflektiert und mittels des Reflexionselements erneut auf die zweite Ebene gerichtet wird. Zwei Detektoren im Strahlengang des an der zweiten Ebene zweifach reflektierten Hilfsstrahlengangs sind mit dem Abbildungssystem verbunden, wobei die Differenz der Ausgangssignale der beiden Detektoren ein Mass für die Abstandsabweichung darstellt. Diese bekannte Anordnung erfordert an das Abbildungssystem angekoppelte Übertragungsglieder in Form von zwei zusätzlichen Linsensystemen und Reflexionselementen und ist zu Abstandsdetektion zwischen einem Objekt und einem Ultraschall-Objektiv, welche relativ zueinander bewegbar sind, weder vorgesehen noch geeignet.

Beim Arbeiten mit einem akustischen Mikroskop liegt der Arbeitsabstand in der Grössenordnung von etwa 30 µm, wobei eine exakte und reproduzierbare Fokussierung des Ultraschall-Objektivs durch eine mechanische Verstellung des Objekttisches mit eine Genauigkeit von besser als 0,1 µm möglich ist (Leitz-Mitt. Wiss. u. Techn., Bd. VIII, Nr. 3/4, Wetzlar Mai 1982, S. 65). Eine aus dieser Druckschrift bekannte Anordnung besteht aus einem akustischen Mikroskop und einem Lichtmikroskop, welche auf einem gemeinsamen Träger montiert und so zueinander justiert sind, dass lichtmikroskopisch ausgewählte oder identifizierte Objektdetails mit nur sehr geringer Abweichung im akustomikroskopischen Bild wiedergefunden werden können. Die eigentliche, endgültige Fokussierung auf die Objektoberfläche zur Erzeugung des Ultraschallbildes erfolgt durch Beobachtung des Kontrasts des akustischen Bildes, der sich im Scharfstellungsbereich bereits bei Änderungen der Wellenlänge des Schalls im Ankopplungsmedium Wasser um weniger als $\lambda/4$, das heisst um ca. 0,1–0,2 µm, beträchtlich ändert.

Da das Ultraschall-Objektiv mit der Frontfläche seines Linsenkörpers sodann etwa im oben angegebenen Arbeitsabstand in zwei rechtwinklig zueinander stehenden Richtungen rasterförmig über die Objektoberfläche bewegt wird, führt jede Berührung mit dem Objekt zu einer Verschmutzung oder gar Beschädigung des Ultraschall-Objektivs und/oder des Objekts und damit zum Funktionsausfall des Gerätes.

Nachdem die Untersuchungen mit dem akustischen Mikroskop weiterhin häufig im abgedunkelten Raum durchgeführt werden, liegen die genannten Gefahren in gleichem Masse bereits bei den Einstellarbeiten vor.

Der Erfindung liegt die Aufgabe zugrunde, ein akustisches Mikroskop der eingangs genannten Art zu schaffen, bei welchem jede Berührung zwischen einem Objekt und einem Ultraschall-Objektiv unabhängig von der Umgebungsbeleuchtung verhindert wird, ohne dass dazu aufwendige Vorarbeiten erforderlich sind und das zudem unter weitgehender Verwendung vorhandener Bauelemente auch bei rasterförmiger Objektabtastung kontinuierlich und mit hoher Empfindlichkeit arbeitet, wobei eine sowohl von der Hochfrequenzkette zur Erzeugung und Weiterleitung von Mikrowellen an den piezoelektrischen Wandler als auch von diesem selbst unabhängige Abstandsdetektion durchführbar ist.

Gemäss der Erfindung wird diese Aufgabe durch die kennzeichnenden Merkmale des Hauptanspruchs gelöst.

Auf diese Weise bilden das Ultraschall-Objektiv mit dem lichtdurchlässigen Linsenkörper eine berührungslos arbeitende Einheit, die als Empfangseinrichtung die Unterschreitung eines Mindestabstandes zwischen Ultraschall-Objektiv und Untersuchungsobjekt erkennt und eine drohende Berührung mit der Objektoberfläche anzeigt oder duch Unterbrechung der Abtastbewegung verhindert.

Beim Annähern des Ultraschall-Objektivs an die Objektoberfläche kann natürliches Umgebungslicht oder auch von einer Lichtquelle erzeugtes, auf das Objekt gerichtetes Licht nur noch über einen Spalt, der sich aus dem Zwischenraum zwischen der Linsenfront und der Objektoberfläche ergibt, in das Innere des Linsenköpers und auf den Fotoempfänger gelangen. Es hat sich nämlich gezeigt, dass durch eine derartige Anordnung eine äusserst empfindliche Abstandsdetektion bei kleinsten Arbeitsabständen durchführbar ist, wobei das als Ankopplungsmedium zwischen Linsenfrontfläche und Objekt verwendete Wasser zusätzlich optische Verluste vermindert. Eine Beeinflussung des Hochfrequenzteils oder des piezoelektrischen Wandlers durch die niederfrequenten Signale des Fotoempfängers kann durch einfache, an sich bekannte schaltungstechnische Massnahmen ausgeschlossen werden.

In vorteilhafter Weiterbildung der Erfindung können der Fotoempfänger auf der der Frontfläche gegenüberliegenden Seite des Linsenkörpers und eine Licht definierter Wellenlänge aussendende Lichtquelle ausserhalb des Ultraschall-Objektivs angeordnet sein und zur Lichtübertragung auf den Spalt (20) ein Lichtleiter (19) vorgesehen werden. Als Lichtquelle sind dabei mit Wechselstrom oder gepulstem Gleichstrom betriebenen Leuchtdioden zweckmässig. Auf diese Weise wird nicht nur ein von der Raumbeleuchtung unabhängiges Arbeiten ermöglicht, sondern bei Verwendung von Leuchtdioden und entsprechenden Empfängern, die im sichtbaren Bereich arbeiten, eine Objektbeleuchtung für die im abgedunkelten Raum stattfindenden Untersuchungen geschaffen.

Für manche Zwecke kann mit Vorteil die Anordnung so getroffen sein, dass die Lichtquelle und der Fotoempfänger innerhalb des Linsenkörpers angeordnet sind.

Es ist weiterhin denkbar, die Fassung für den Linsenkörper lichtleitend auszubilden und sowohl die Lichtquelle als auch den Fotoempfänger auf der dem Objekt abgewandten Seite des Linsenkörpers in der Nähe des piezoelektischen Wandlers anzuordnen.

Die vom piezoelektrischen Wandler auf der Rückseite des Linsenkörpers aufgenommenen Objektsignale und über Verstärkerstufen weitergeleiteten Hochfrequenzsignale werden mit dem niederfrequenten Ausgang des dem piezoelektrischen Wandler benachbarten Fotoempfängers gemeinsam über eine koaxiale Leitung an eine elektrische Schaltung gelegt. Diese besteht im wesentlichen aus einer aus Kondensatoren und Induktivitäten gebildeten Frequenzweiche, wobei die Kondensatoren so bemessen sind, dass sie lediglich die Hochfrequenz übertragen, während die Induktivitäten als Sperre für die Hochfrequenz wirken, jedoch einen geringen Widerstand gegenüber der Niederfrequenz des Fotoempfängers aufweisen, für welchen sie die Arbeitsspannung weiterleiten.

Weitere Einzelheiten der Erfindung gehen aus der nachfolgenden Beschreibung zweier in der Zeichnung schematisch dargestellter Ausführungsbeispiele hervor. Es zeigen:

Fig. 1 eine vereinfachte Schnittansicht eines ersten Ausführungsbeispiels der erfindungsgemässen Anordnung,

Fig. 2 eine zweite Ausführungsform in vereinfachter Schnittansicht, und

Fig. 3 ein Blockschaltbild für eine Abstandsdetektion nach dem Ausführungsbeispiel gem. Fig. 1.

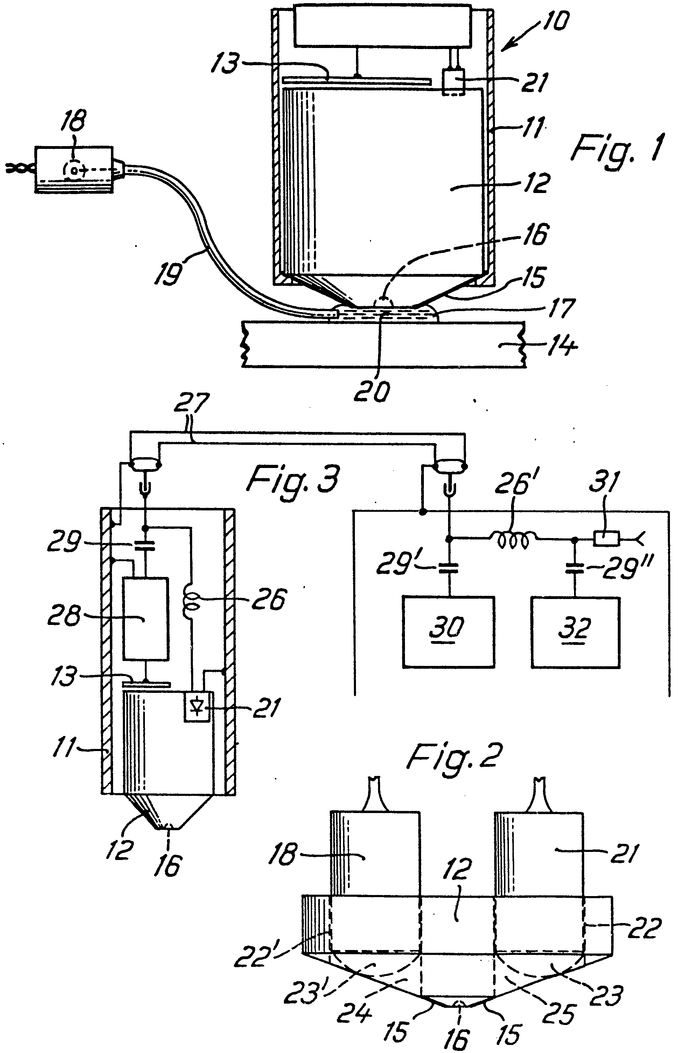

In dem Ausführungsbeispiel nach Fig. 1 ist ein Ultraschall-Objektiv (10) gezeigt, welches im wesentlichen aus einem in einer Fassung (11) befestigten Linsenkörper (12) besteht, auf dessen oberer, ebener Fläche ein piezoelektrischer Wandler (13) angeordnet ist. Die untere, einem Untersuchungsobjekt (14) zugewandte Fläche des Linsenkörpers (12) wird durch eine konische, lichtundurchlässige Ringzone (15) mit einer zentralen, sphärischen Kalotte (16) gebildet. Zwischen dem Untersuchungsobjekt (14) und der Ringzone (15) mit der Kalotte (16) befindet sich ein flüssiges Ankopplungsmedium (17) (Wasser), wobei letzteres zusammen mit der Kalotte (16) die eigentliche Ultraschall-Linse bildet. Zur Beleuchtung des Untersuchungsobjekts (14) ist neben dem Ultraschall-Objektiv (10) eine Lichtquelle (18) mit einem Lichtleiter (19) angeordnet. Als Lichtquelle ist hier eine mit Wechselstrom oder gepulstem Gleichstrom betriebene Leuchtdiode verwendet, wodurch die Beleuchtungsanordnung unabhängig von der Raumbeleuchtung arbeitet. Das vom Untersuchungsobjekt (14) und dem Immersionsmittel (17) kommende Licht gelangt sodann nur noch über einen Spalt (20), der sich aus dem Zwischenraum zwischen der Linsenfront und der Objektoberfläche ergibt, in den Linsenkörper (12) und von diesem auf einen Fotoempfänger (21), welcher auf der dem Untersuchungsobjekt (14) abgewandten Seite des Linsenkörpers (12) neben dem piezoelektrischen Wandler (13) angeordnet ist. Das Ankopplungsmedium (17) Wasser wird dabei nicht nur als zusätzliches lichtleitendes Medium zum Linsenkörper (12) hin genutzt, sondern verhindert auch optische Verluste.

Das Ausführungsbeispiel nach Fig. 2 unterscheidet sich von demjenigen nach Fig. 1 dadurch, dass sowohl die Lichtquelle (18) als auch der Fotoempfänger (21) in das Innere des Linsenkörpers (1) verlegt worden sind. Letztere weist dazu zwei Bohrungen (22, 22') auf, deren unteres Ende durch je eine Linse (23, 23') gebildet ist. Die lichtundurchlässige Ringzone (15) schliesst hier wie in Fig. 1 an die Kalotte (16) an. Das von der Lichtquelle (18) ausgesandte Licht gelangt durch eine kreisförmige Lichtaustrittsöffnung (24) auf das Untersuchungsobjekt (14), und der von diesem reflektierte und/oder gestreute Anteil trifft über eine Lichteintrittsöffnung (25) auf den Fotoempfänger (21).

Fig. 3 zeigt in einem Blockschaltbild die elektrische Schaltungsanordnung für das Ausführungsbeispiel nach Fig. 1. Innerhalb der Fassung (11) des Linsenkörpers (12) sind auf dessen dem Untersuchungsobjekt (14) gegenüberliegenden Seite der piezoelektrische Wandler (13) und der Fotoempfänger (21) angeordnet. Das vom Untersuchungsobjekt (14) durch den Spalt (20) fallende Licht trifft auf den Fotoempfänger (21), welcher an seinem Ausgang niederfrequente Signale über eine Induktivität (26) in eine koaxiale Leitung (27) speist. Diese führt andererseits die vom piezoelektrischen Wandler (13) empfangenen und über ein Anpassungs-Netzwerk (28) und einen nachgeschalteten Kondensator (29) abgegebenen Hochfrequenzsignale. Letztere werden über einen weiteren Kondensator (29') einem Hochfrequenz-Sender/Empfänger (30) zugeführt, während die Niederfrequenz über eine zweite Induktivität (26') die Arbeitsspannung für den Fotoempfänger (21) weiterleitet. An einem Arbeitswiderstand (31) bildet sich sodann die Signalspannung für die Abstandsdetektion aus, die über einen Kondensator (29'') einem Niederfrequenz-Verstärker (32) zugeführt wird. Die Kondensatoren (29, 29') und die Induktivitäten (26, 26') bilden bei der vorliegenden Schaltungsanordnung, wie bereits erwähnt, eine Frequenzweiche, in dem die Kondensatoren (29, 29') so ausgelegt sind, dass sie nur die Hochfrequenz übertragen, während umgekehrt die Induktivitäten (26, 26') als Hochfrequenzsperre wirken, jedoch nur einen geringen Widerstand gegenüber der Niederfrequenz aufweisen.

**Patentansprüche**

1. Akustisches Mikroskop zur Untersuchung von Objekten mit
– einem Ultraschall-Objektiv, das einen lichtdurchlässigen Linsenkörper mit einer als sphärische Kalotte ausgebildeten Vertiefung im Zentrum seiner einem Untersuchungsobjekt zugewandten Frontfläche sowie eine den Linsenkörper halternde und diesen bis auf seine Frontfläche gegen Lichteinfall abschirmende Fassung aufweist,
– einer Sende/Empfangseinrichtung für Ultraschallsignale, die einen in der Fassung angeordneten und mit dem Linsenkörper gekoppelten piezoelektrischen Wandler enthält, sowie
– einem Immersionsmittel in dem zwischen der Frontfläche des Linsenkörpers und dem Untersuchungsobjekt gebildeten Spalt (20), dadurch gekennzeichnet, dass
– die Frontfläche des Linsenkörpers (12) in einer ringförmigen Zone (15), die sich zwischen dem Rand der Fassung und dem Rand eines die Kalotte enthaltende, vollständig im Immersionsmittel eingetauchten zentralen Bereichs erstreckt, lichtundurchlässig ist,
– innerhalb der Fassung (11) ein Fotoempfänger (21) zum Empfang von Licht angeordnet ist, das durch den Spalt (20) von dessen äusserem Rand her in das Immersionsmittel (17) eintritt und nach Streuung am Untersuchungsobjekt (14) über den zentralen Bereich der Frontfläche des Linsenkörpers (12) in die Fassung gelangt, und
– Einrichtungen (26–32) zum Erkennen der Unterschreitung eines Mindestabstands zwischen Ultraschall-Objektiv (10) und Untersuchungsobjekt (14) anhand des Ausgangssignals des Fotoempfängers (21) vorgesehen sind.

2. Mikroskop nach Anspruch 1, dadurch gekennzeichnet, dass der Fotoempfänger (21) auf der der Frontfläche gegenüberliegenden Seite des Linsenkörpers (12) und eine Licht definierter Wellenlänge aussendende Lichtquelle (18) ausserhalb des Ultraschall-Objektivs (10) angeordnet sind und zur Lichtübertragung auf den Spalt (20) ein Lichtleiter (19) vorgesehen ist.

3. Mikroskop nach Anspruch 1, dadurch gekennzeichnet, dass die Lichtquelle (18) und der Fotoempfänger (21) innerhalb des Linsenkörpers (12) angeordnet sind.

**Claims**

1. Acoustic microscope for the examination of objects with
– an ultrasonic objective which displays a light-permeable lens body with a depression formed as spherical cap in the centre of its front surface facing an examination object as well as a mounting which holds the lens body and screens this apart from its front surface against incidence of light,
– a transmit-receive equipment for ultrasonic signals, which contains a piezo-electric transducer arranged in the mounting and coupled with the lens body as well as
– an immersion means in the gap (20) formed between the front surface of the lens body and the examination object, characterised thereby, that
– the front surface of the lens body (12) is impermeable by light in an annular zone (15), which extends between the rim of the mounting and the rim of a central region which contains the cap and is completely immersed in the immersion means,
– a photo-receiver (21) is a arranged within the mounting (11) for the reception of light which enters through the gap (20) from the outer rim thereof into the immersion means (17) and after scattering at the examination object (14) gets by way of the central region of the front surface of the lens body (12) into the mounting and
– equipments (26 to 32) are provided for the recognition of a minimum spacing having been fallen below between the ultrasonic objective (10) and the examination object with the aid of the output signal of the photo-receiver (21).

2. Microscope according to claim 1, characterised thereby, that the photo-receiver (21) is arranged on that side of the lens body (12), which lies opposite the front surface, and a light source (18) emitting light of defined wavelength is arranged outside the ultrasonic objective (10) and an optical conductor (19) is provided for the light transmission to the gap (20).

3. Microscope according to claim 1, characterised thereby, that the light source (18) and the photo-receiver (21) are arranged within the lens body (12).

**Revendications**

1. Microscope acoustique pour l'examen d'objets avec un objectif à ultrasons, qui présente un corps de lentille transparent avec un évidement en forme de calotte sphérique au centre de sa surface frontale tournée vers l'objet à examiner ainsi qu'une monture maintenant le corps de lentille et protégeant celui-ci jusque sur sa surface frontale contre l'arrivée de lumière, un dispositif émetteur/récepteur pour signaux à ultrasons, qui contient un convertisseur piézo-électrique disposé dans la monture et couplé avec le corps de lentille, ainsi qu'un milieu d'immersion dans la fente (20) formée entre la surface frontale du corps de lentille et l'objet à examiner, caractérisé en ce que la surface frontale du corps de lentille (12) est opaque à la lumière dans une zone annulaire (15) qui s'étend entre le bord de la monture et le bord d'une zone centrale totalement immergée dans le milieu d'immersion et qui contient la calotte centrale,
– à l'intérieur de la monture (11) est disposé un photorécepteur (21) pour la réception de la lumière, qui pénètre dans le milieu d'immersion (17) par l'intermédiaire de la fente (20) depuis le bord externe de celle-ci et après diffusion au niveau de l'objet à examiner (14) aboutit dans la monture par l'intermédiaire de la zone centrale de la surface frontale du corps de lentille (12) et

– des dispositifs (26–32) sont prévus pour reconnaître le franchissement dans le sens décroissant d'une distance minimale entre l'objectif à ultrasons (10) et l'objet à examiner (14) au moyen du signal de sortie du photorécepteur (21).

2. Microscope selon la revendication 1, caractérisé en ce que le photorécepteur (21) est disposé sur le côté opposé à la surface frontale du corps de lentille (12) et en ce qu'une source lumineuse (18) émettant une lumière de longueur d'onde définie est disposée à l'extérieur de l'objectif à ultrasons (10) et en ce qu'un conducteur de lumière (19) est prévu pour la transmission de lumière sur la fente (20).

3. Microscope selon la revendication 1, caractérisé en ce que la source lumineuse (18) et en ce que le photorécepteur (21) sont disposés à l'intérieur du corps de lentille (12).

EP 0 146 701 B1

Fig. 1

Fig. 3

Fig. 2